Europäisches Patentamt

European Patent Office

Office européen des brevets

(11) Publication number: **0 539 642 B1**

# EUROPEAN PATENT SPECIFICATION

(45) Date of publication of patent specification: **27.12.95**　(51) Int. Cl.⁶: **G01J 3/46**, G01N 21/47

(21) Application number: **91480168.3**

(22) Date of filing: **31.10.91**

(54) **Method for determining the composition of a compound color which is a mixture of basic component colors**

(43) Date of publication of application:
**05.05.93 Bulletin 93/18**

(45) Publication of the grant of the patent:
**27.12.95 Bulletin 95/52**

(84) Designated Contracting States:
**DE FR GB**

(56) References cited:
**EP-A- 0 152 950**
**DE-B- 2 045 341**

(73) Proprietor: **International Business Machines Corporation**
**Old Orchard Road**
**Armonk, N.Y. 10504 (US)**

(72) Inventor: **Pinchon, Didier**
**46, rue Crébillon**
**F-94300 Vincennes (FR)**

(74) Representative: **Lattard, Nicole**
**Compagnie IBM France**
**Département de Propriété Intellectuelle**
**F-06610 La Gaude (FR)**

**Description**

The present invention relates to a method for determining the composition of a compound color which is a mixture of basic component colors and more specifically to a method for digitally matching the color of a specimen versus a standard specimen.

In the manufacture of paints or dyes it is very difficult to match a color versus a color standard without an adjustment process known as shading.

Traditionally, the shading process has been carried out visually by highly skilled personnel. This visual process is time consuming and therefore very expensive. One has proposed mathematical expressions which attempted to characterize the optical characteristics of colored objects. However, practical applications have been very rare, due to the complexity of the mathematics involved. The evolution of high-speed digital computers has drawn again the attention on a theory known as the Kubelka-Munk analysis. The Kubelka-Munk analysis is based on equations which relate the effect of a scatter component (S) and an absorption component (K) in terms of measured reflectance. Until recently the volume of calculations associated with the Kubelka-Munk equations had precluded usage of the method. However, the availability of digital computers has allowed the calculations to be made in a much shorter time.

Nevertheless, the problem of calculating a compound color composition has long been known to be a complicated non linear one, and no completely satisfactory digital methods of making the calculations have, as yet, been reported. Moreover, the use of the Kubelka-Munk equations leads to a model which is not identifiable for the relationship between the measures and the concentrations of the different colors in the mixture. That means that even a great number of measures made on known mixtures will not allow to calculate the coefficients which appear in the equations.

It is therefore a principal object of the invention to provide a method for building a colorimetric data base and for determining precisely the composition of a compound color which is a mixture of basic component colors.

It is another object of the invention to provide a digital color match prediction method which is independent of the measuring apparatus used.

This is made possible by the use of a set of parameters different from those actually used in the methods based on the Kubelka-Munk theory.

According to the invention a method is provided for determining the composition of a compound color corresponding to a standard specimen, the color of which is to be matched, characterized in that it comprises the following steps :

-   preparing a set of specimens with n given component colors,
-   selecting a reference color among said given a component colors,
-   preparing specimens with mixtures of said reference color with increasing concentrations of each of the (n-1) other component colors,
-   preparing mixtures of a given number of component colors defined by the respective concentrations of each component color,
-   measuring with a first spectrophotometer the light reflected by each specimen of the n component colors for a plurality of wavelengths,
-   calculating from said measures two predefined parameters, p and q, characterizing said colors,
-   measuring with a second spectrophotometer the light reflected by one specimen comprising the mixture of said reference color with a component color for a plurality of wavelengths,
-   calculating from said measures two parameters, r and s, characterizing said second spectrophotometer and a coupling constant ($\Theta$) between said second spectrophotometer and the the referenced color,
-   measuring with said second spectrophotometer the light reflected by the specimen of the compound color, the composition of which is to be determined, for a plurality of wavelengths,
-   calculating from said measures different compositions giving for said compound color the concentrations of the respective component colors,
-   selecting from said different compositions for said compound color, the one which is the closest to the one defined when preparing the mixtures of component colors.

A known method for making color-match prediction based on the Kubelka-Munk theory (D.B JUDD and G. WYSZECKI: Color in Business, Science and Industry, JOHN WILEY & SONS, pages 450 & seq.) comprises the following steps :

1. Collecting basic input data (data base)
  1.1.Preparing standard specimens with given component colorants at given concentrations.
  1.2.Determining the spectral reflectances of the standard specimens by spectrophotometry.

2

1.3.Calculating basic optical data for the standard specimens.

1.4.Storing basic optical data in the data base.

2. Calculating colorant recipe

2.1.Determining the spectral reflectances and tristimulus values of the original specimen to be color matched.

2.2.Feeding data of the original specimen into the computer.

2.3.Recalling basic optical data of appropriate standard specimens defining the component colorants to be used.

2.4.Calculating the colorant recipe, that is the required concentrations of the component colorants.

3. Checking predicted color match

3.1.Preparing duplicate specimen on the basis of calculated recipe.

3.2.Determining tristimulus values of duplicate specimen and differences.

3.3.Determining acceptability of color difference between duplicate and original specimen.

4. Correcting colorant recipe (if required)

Let us discuss some of the steps of the above procedure.

A measuring apparatus, such as a spectrophotometer, is generally characterized by the wavelength of the light beam emitted by the light source and by :

$K_S$     : reflection coefficient at the surface of the sample,

$K_A$     : internal reflection coefficient of the measuring apparatus,

$M_0$     : multiplicative factor,

$\alpha$     : portion of the (specular) reflected light captured by the apparatus.

The value $M$, read from the measuring apparatus, is :

$$M = M_0(\alpha K_S + (1 - K_S)(1 - K_A)\frac{R}{1 - K_A R})$$

Where R is the reflection coefficient of a given color for a given wavelength.

For the purpose of this calculation $\alpha$ is chosen to be equal to 1, but the results still remain valid with $\alpha$ being equal to any other value.

For $\alpha = 1$

$$(1) \quad M = M_0 \frac{(1 - K_S - K_A)R + K_S}{1 - K_A R}$$

Let us now assume that a compound color is obtained by mixing two basic component colors, e.g. white, with a reflection coefficient $R_w$ comprised between 0,8 and 1 and black, with a reflection coefficient $R_b$ comprised between 0 and 0,2.

$M$ is a function increasing with $R$ which varies between $R_b$ and $R_w$.

With

$$R' = \frac{(1 - K_S - K_A)R + K_S}{1 - K_A R}$$

equation (1) becomes $M = M_0 R'$

Equation (1) can also be written

$$(2) \quad R = \frac{tM + u}{vM + w}$$

where $tw - uv = 1$ and

$$t = \frac{1}{\sqrt{\Delta}} \text{ with } \Delta = M_0(1 - K_S)(1 - K_A) \tag{3.1}$$

$$u = -\frac{K_S M_0}{\sqrt{\Delta}} \tag{3.2}$$

$$v = \frac{K_A}{\sqrt{\Delta}} \tag{3.3}$$

$$w = \frac{M_0(1 - K_S - K_A)}{\sqrt{\Delta}} \tag{3.4}$$

with

$$t > 0, u < 0, v > 0, t > v, w > u$$

Conversely, from equations (3) the values of $M_O, K_S, K_A$ can be calculated

$$M_0 = \frac{w - u}{t - v} \tag{4.1}$$

$$K_S = -\frac{u}{t} \frac{t - v}{w - u} \tag{4.2}$$

$$K_A = \frac{v}{t} \tag{4.3}$$

Let us now assume that $x$ is the concentration of the white color in a mixture of white and black colors. It follows that $0 < x < 1$.

Let us define a parameter k which is a characteristic of the mixture of color and an homographic function of the concentration $x$.

$$k = \frac{xK_w + (1 - x)K_b}{xS_w + (1 - x)S_b} \tag{5}$$

where :

$K_w$ = absorption coefficient of the white color,

$S_w$ = scattering coefficient of the white color,
$K_b$ = absorption coefficient of the black color,
$S_b$ = scattering coefficient of the black color,

with $K_b > K_w$ , $S_b < S_w$

so that

$$\frac{K_b}{S_b} > \frac{K_w}{S_w}$$

k is a function decreasing with $x$.
(5) becomes

$$(6) \quad k = \frac{ax + b}{cx + d} \, , ad - bc = -1$$

where :

$$(7.1) \quad a = \frac{K_w - K_b}{\sqrt{\Delta}}$$

with $\Delta = K_b S_w - K_w S_b$

$$(7.2) \quad b = \frac{K_b}{\sqrt{\Delta}}$$

$$(7.3) \quad c = \frac{S_w - S_b}{\sqrt{\Delta}}$$

$$(7.4) \quad d = \frac{S_b}{\sqrt{\Delta}}$$

with $a < 0, b > 0, c > 0, d > 0, a + b > 0$.

Conversely, it is posssible to compute $K_w, S_w, K_b, S_b$ from $a, b, c, d,$ and more particularly

$$\frac{K_b}{S_b} = \frac{b}{d} \; ; \frac{K_w}{S_w} = \frac{a + b}{c + d}$$

The modelisation of a system comprised of a measuring apparatus and a color range, i.e. the color obtained by mixing two basic colors, egg. white and black, for a given wavelength, can be enhanced by providing a relationship between the values of $R$ and $k$

The relationship chosen here, is the so-called Kubelka-Munk equation :

$$R = 1 + k - \sqrt{k^2 + 2k} \, , k > 0, \tag{8}$$

or conversely

$$(9) \quad k = \frac{(1-R)^2}{2R}$$

This model is completely determined by the choice of the parameters $(a, b, c, d, t, u, v, w)$, with :

(10) $ad - bc = -1$, where $a < 0, b > 0, c > 0, d > 0, a + b > 0$,

$tw - uv = 1$, where $t > 0, u < 0, v > 0, t > v, w > u$.

to which corresponds a function $x \rightarrow m(x)$ giving the measure as a function of the concentration, or conversely, $m \rightarrow x(m)$ giving the concentration as a function of the measure.

Let $M(a, b, c, d, t, u, v, w)$ be the model.

We will now show that this model is not identifiable, that is that different choices of the parameters which verify (10), lead to the same function.

For the model $M(a, b, c, d, t, u, v, w)$, the concentration $x$ is given by the following relationship :

$$(11) \quad x = \frac{Am^2 + Bm + C}{Dm^2 + Em + F}$$

with :

$$A = d(t - v)^2 - 2btv \tag{12.1}$$
$$B = 2[d(t - v)(u - w) - b(uv + tw)] \tag{12.2}$$
$$C = d(u - w)^2 - 2buw \tag{12.3}$$
$$D = -c(t - v)^2 + 2atv \tag{12.4}$$
$$E = 2[-c(t - v)(u - w) + a(uv + tw)] \tag{12.5}$$
$$F = -c(u - w)^2 + 2auw \tag{12.6}$$

Using :

$$\alpha = \tfrac{1}{2}(AF - DC)$$
$$\beta = \tfrac{1}{2}(AE - BD)$$
$$\gamma = \tfrac{1}{2}(CE - BF),$$

one gets the following relationship :

$$\alpha^2 + \beta\gamma = 1 \text{ with } \alpha > 0; \beta < 0$$

Let us now assume that instead of the variables $(a, b, c, d)$, where $ad - bc = -1$, we choose the variables $(a, p, q)$, such that

$$(13) \quad p = \frac{a}{b}, q = \frac{2c + a}{2d + b}$$

and conversely

$$(14) \quad b = \frac{a}{p}, c = -\frac{a}{2} - \frac{pq}{a(p-q)}, d = -\frac{a}{2p} - \frac{p}{a(p-q)}$$

and, that instead of the variables (t, u, *v*, w) where tw - u $v$ = 1, we choose the variables (r, s, X), such that

$$(15) \quad r = \frac{w - u}{t - v}, s = \frac{w + u}{t + v}, X = t + v$$

and conversely

$$(16.1) \quad t = \frac{X}{2} + \frac{1}{X(s + r)}$$

$$(16.2) \quad u = -\frac{Xs}{2} - \frac{r}{X(s + r)}$$

$$(16.3) \quad v = \frac{X}{2} - \frac{1}{X(s + r)}$$

$$(16.4) \quad w = \frac{Xs}{2} + \frac{r}{X(s + r)}$$

By introducing now the parameter $K$, defined by

$$K = aX^2$$

it is now possible to express ($A$, $B$, $C$, $D$, $E$, $F$) as a function of parameters $p$, $q$, $r$, $s$, $k$

$$(18.1) \quad A = -\frac{k}{2p} - \frac{4p}{k(p-q)(s+r)^2}$$

$$(18.2) \quad B = -\frac{ks}{p} + \frac{8pr}{k(p-q)(s+r)^2}$$

$$(18.3) \quad C = -\frac{ks^2}{2p} - \frac{4pr^2}{k(p-q)(s+r)^2}$$

$$(18.4) \quad D = \frac{k}{2} + \frac{4pq}{k(p-q)(s+r)^2}$$

$$(18.5) \quad E = ks - \frac{8pqr}{k(p-q)(s+r)^2}$$

$$(18.6) \quad F = \frac{ks^2}{2} + \frac{4pqr^2}{k(p-q)(s+r)^2}$$

Conversely, knowing $A$, $B$, $C$, $D$, $E$, $F$, it is possible to determine $p$, $q$, $r$, $s$, $k$ by the following formulas :

$$\alpha = \tfrac{1}{2}(AF - DC), \ \beta = \tfrac{1}{2}(AE - BD), \ \gamma = \tfrac{1}{2}(CE - BF) \tag{19}$$

then :

$$(20.1) \quad r = -\frac{\alpha + 1}{\beta}$$

$$(20.2) \quad s = \frac{\alpha - 1}{\beta}$$

$$(20.3) \quad p = \frac{F - Dr^2}{Ar^2 - C}$$

$$(20.4) \quad q = \frac{Ds^2 - F}{C - As^2}$$

$$(20.5) \quad k = D(\alpha + 1) - \frac{\beta E}{2}$$

The conclusion is that the calculations that one can make on a series of measures with an apparatus on a binary range of colors do not allow to completely determine the parameters relative to the apparatus and those relative to the colors of the mixture. Indeed, knowing the value of $K$, it is possible to make a and $X$ vary, so that $aX^2$ remains constant and equal to $K$. Moreover, this also shows that the use of several measuring apparatuses, using the same wave-length, do not allow either to completely determine these parameters. Indeed relation (14) shows that the point of coordonates (*a, b, c, d*) follows a parametric curve independent of the measuring apparatus.

The study of a series of measures allows to determine two parameters *p* and *q* related to the binary range of colors, two parameters *r* and *s* related to the measuring apparatus and a correlation factor *K*.

That means that it is possible to determine *p, q, r, s,* for a binary range of colors:

$$\frac{K_b}{K_w} = \frac{1}{1 + p}$$

and,

$$\frac{K_b + 2S_b}{K_w + 2S_w} = \frac{1}{1 + q}$$

and for the measuring apparatus :

$$M_0 = r$$

9

$$\frac{1 - K_S}{1 + K_A} = \frac{1 + s}{2}$$

but neither $K_S$ or $K_A$ separately.

Let us now assume that the system is comprised of a measuring apparatus and of a finite set of $n$ basic colors. The first color is assumed to be white, with constants $K_1$ and $S_1$. The constants relative to each of the other basic colors are noted $K_i$ and $S_i$, i varying from 2 to $n$.

Let $p_i, q_i$ and $k_i$ be the constants computed from the measures made on the mixtures between white and color # i.

The constant

$$(21) \quad \Theta = \frac{p_i^2(q_i + 1)}{k_i^2(1 + p_i)(q_i - p_i)} \frac{1}{(s + r)^2}$$

is dependent from the constants characteristic of the white color and of the measuring apparatus only and is equal to :

$$(22) \quad \Theta = \frac{2S_1 + K_1}{2K_1} \frac{1}{X^4} \frac{1}{(s + r)^2}$$

$\Theta$ is defined as the "coupling constant" between the measuring apparatus and the considered white color.

Let us now assume that the constants $r$ and $s$ relative to the measuring apparatus, the coupling constant $\Theta$ and the family of coefficients $p_i$ and $q_i$ for the color # $i$, with $i$ varying from 2 to $n$ are known.

If $m$ is the measure made by said apparatus for a color resulting of the mixture of the $n$ colors, with a concentration $x$, of white and concentration $x_i$ for the colors # 2 to $n$, with

$$x_1 + x_2 + .... + x_n = 1$$

Then $m$ determines a linear relationship between the concentrations :

$$(23) \quad (A_1 m^2 + B_1 m + C_1)x_1 + \sum_{i=2}^{i=n}(A_i m^2 + B_i m + C_i)x_i = 0$$

with :

$$A_1 = \tfrac{1}{2} - 4\Theta \qquad\qquad (24.1)$$
$$B_1 = s + 8\Theta r \qquad\qquad (24.2)$$

$$(24.3) \quad C_1 = \frac{s^2}{2} - 4\Theta r^2$$

$$(24.4) \quad A_i = \frac{1}{2} \frac{1}{1 + p_i} - 4\Theta \frac{1}{1 + q_i} \, , \, i = 2,..., n$$

$$(24.5) \quad B_i = s \frac{1}{1 + p_i} + 8\Theta r \frac{1}{1 + q_i} \, , \, i = 2,...,n$$

$$(24.6) \quad C_i = \frac{s^2}{2} \frac{1}{1 + p_i} - 4\Theta r^2 \cdot \frac{1}{1 + q_i} \, , \, i = 2,...,n$$

Let us assume again that the constants $r$ and $s$ relative to the measuring apparatus, the coupling constant $\Theta$ and the family of coefficients $p_i$ and $q_i$ for the color # i, with $i$ varying from 2 to $n$, are known.

For a mixture of $n$ colors corresponding to the concentrations $x_i$ , the measure $m$ is the smallest positive root of the equation

$$a_c m^2 + b_c m + c_c = 0, \tag{25}$$

where the coefficients $a_c, b_c, c_c$ are determined by

$$(26.1) \quad a_c = \frac{1}{2} \left( x_1 + \sum_{i=2}^{i=n} \frac{1}{1 + p_i} x_i \right) - 4\Theta \left( x_1 + \sum_{i=2}^{i=n} \frac{1}{1 + q_i} x_i \right)$$

$$(26.2) \quad b_c = s \left( x_1 + \sum_{i=2}^{i=n} \frac{1}{1 + p_i} x_i \right) + 8\Theta r \left( x_1 + \sum_{i=2}^{i=n} \frac{1}{1 + q_i} x_i \right)$$

$$(26.3) \quad c_c = \frac{s^2}{2} \left( x_1 + \sum_{i=2}^{i=n} \frac{1}{1 + p_i} x_i \right) - 4\Theta r^2 \left( x_1 + \sum_{i=2}^{i=n} \frac{1}{1 + q_i} x_i \right)$$

The method herein before reported can now be described, taking into account the coefficients defined above, by the following steps :
-   preparing a set of specimens with n given component colors,
-   selecting a reference color among said given n component colors,
-   preparing specimens with mixtures of said reference color with increasing concentrations of each of the (n- 1) other component colors,

- preparing mixtures of a given number of component colors defined by the respective concentrations of each component color,
- measuring with a first spectrophotometer the light reflected by each specimen of the n component colors for a plurality of wavelengths,
- calculating from said measures two parameters, p and q, characterizing said colors,
- measuring with a second spectrophotometer the light reflected by one specimen comprising the mixture of said reference color with a component color for a plurality of wavelengths,
- calculating from said measures two parameters, r and s, characterizing said second spectrophotometer and a coupling constant ($\Theta$) between said second spectrophotometer and the referenced color,
- measuring with said second spectrophotometer the light reflected by the specimen of the compound color, the composition of which is to be determined, for a plurality of wavelengths,
- calculating from said measures different compositions giving for said compound color the concentrations of the respective component colors,
- selecting from said different compositions for said compound color, the one which is the closest to the one defined when preparing the mixtures of component colors.

**Claims**

1. Method for determining the composition of a compound color corresponding to a standard specimen, the color of which is to be matched, comprising the following steps :
   - preparing a set of specimens with n given component colors,
   - selecting a reference color among said given n component colors,
   - preparing specimens with mixtures of said reference color with increasing concentrations of each of the (n- 1) other component colors,
   - preparing mixtures of a given number of component colors defined by the respective concentrations of each component color,
   - measuring with a first spectrophotometer the light reflected by each specimen of the n component colors for a plurality of wavelengths,
   - calculating from said measures two parameters, p and q, characterizing said colors,
   - measuring with a second spectrophotometer the light reflected by one specimen comprising the mixture of said reference color with a component color for a plurality of wavelengths,
   - calculating from said measures two parameters, r and s, characterizing said second spectrophotometer and a coupling constant ($\Theta$) between said second spectrophotometer and the referenced color,
   - measuring with said second spectrophotometer the light reflected by the specimen of the compound color, the composition of which is to be determined, for a plurality of wavelengths,
   - calculating from said measures different compositions giving for said compound color the concentrations of the respective component colors,
   - selecting from said different compositions for said compound color, the one which is the closest to the one defined when preparing the mixtures of component colors.

2. Method according to claim 1 wherein said n given components colors are white and black, and said two parameters characterizing said colors are given by

$$p = \frac{K_w}{K_b} - 1$$

$$q = \frac{K_w + 2S_w}{K_b + 2S_b} - 1$$

where :
$K_w$ = absorption coefficient of the white color,
$K_b$ = absorption coefficient of the black color,
$S_w$ = scattering coefficient of the white color,
$S_b$ = scattering coefficient of the black color.

**3.** Method according to claim 1 or 2 wherein said two parameters characterizing said second spectrophotometer are given by

$$r = M_0$$

$$s = \frac{2(1 - K_s) - (1 + K_A)}{1 + K_A}$$

where :

$M_0$ : multiplicative factor,
$K_S$ : reflection coefficient at the surface of the sample,
$K_A$ : internal reflection coefficient of the measuring apparatus,

**4.** Method according to claim 3 wherein said coupling constant between said second spectrophotometer and said referenced color is

$$\Theta = \frac{2S_1 + K_1}{2K_1} \frac{1}{X^4} \frac{1}{(s + r)^2}$$

wherein :

$S_1$ : scattering coefficient of said referenced color,
$K_1$ : absorption coefficient of said referenced color,

$$X = t + v$$

with

$$t = \frac{1}{\sqrt{\Delta}} ,$$

$$v = \frac{K_A}{\sqrt{\Delta}},$$

$$\Delta = M_0(1 - K_S)(1 - K_A)$$

**Patentansprüche**

**1.** Verfahren zur Bestimmung der Zusammensetzung einer aus einer Farbenmischung bestehenden Farbe, die einer Standardprobe entspricht, deren Farbe nachgebildet werden soll, die folgenden Schritte umfassend:
- Vorbereiten eines Probensatzes mit n gegebenen Komponentenfarben,
- Auswahl einer Referenzfarbe aus den n gegebenen Komponentenfarben,
- Vorbereiten von Proben mit Mischungen der Referenzfarbe mit zunehmenden Konzentrationen jeder der (n-1) anderen Komponentenfarben,
- Vorbereiten von Mischungen aus einer gegebenen Anzahl von Komponentenfarben, die durch die entsprechenden Konzentrationen jeder Komponentenfarbe definiert sind,
- Messen des durch jede Probe der n Komponentenfarben reflektierten Lichtes bei einer Vielzahl von Wellenlängen mittels eines ersten Spektrophotometers,

13

- aus den Messungen Berechnen von zwei Parametern, p und q, die diese Farben charakterisieren,
- Messen des von einer Probe, die eine Mischung der Referenzfarbe mit einer Komponentenfarbe aufweist, reflektierten Lichtes bei einer Vielzahl von Wellenlängen mittels eines zweiten Spektrophotometers,
- aus den Messungen Berechnen von zwei Parametern, r und s, die das zweite Spektrophotometer und eine Koppelkonstante ($\Theta$) zwischen dem zweiten Spektrophotometer und der Referenzfarbe charakterisieren,
- Messen des von der Probe mit der Farbenmischung, deren Zusammensetzung bestimmt werden soll, reflektierten Lichtes bei einer Vielzahl von Wellenlängen mittels des zweiten Spektrophotometers,
- aus den Messungen Berechnen von verschiedenen Zusammensetzungen, die für die Farbenmischung die Konzentrationen der entsprechenden Komponentenfarben angeben,
- aus den verschiedenen Zusammensetzungen für die besagte Farbenmischung Auswahl der Zusammensetzung, welche der beim Vorbereiten der Mischungen der Komponentenfarben definierten Farbenmischung am nächsten kommt.

2. Verfahren gemäß Anspruch 1, wobei die n gegebenen Komponentenfarben weiß und schwarz sind, und die zwei Parameter, die diese Farben charakterisieren, gegeben sind durch

$$p = \frac{K_w}{K_b} - 1$$

$$p = \frac{K_w + 2 S_w}{K_b + 2 S_b} - 1$$

worin gilt:
$K_w =$ Absorptionskoeffizient der weißen Farbe,
$K_b =$ Absorptionskoeffizient der schwarzen Farbe,
$S_w =$ Streuungskoeffizient der weißen Farbe,
$S_b =$ Streuungskoeffizient der schwarzen Farbe.

3. Verfahren gemäß Anspruch 1 oder 2, wobei die zwei Parameter, welche das zweite Spektrophotometer charakterisieren, gegeben sind durch:

$$r = M_0$$

$$s = \frac{2 (1 - K_S) - (1 + K_A)}{(1 + K_A)}$$

worin gilt:
$M_0:$ Multiplikationsfaktor,
$K_S:$ Reflexionskoeffizient auf der Oberfläche der Probe,
$K_A:$ innerer Reflexionskoeffizient der Meßeinrichtung.

4. Verfahren gemäß Anspruch 3, wobei die Koppelkonstante zwischen dem zweiten Spektrophotometer und der Referenzfarbe sich ergibt zu:

$$\Theta = \frac{2 S_1 + K_1}{2 K_1} \frac{1}{X^4} \frac{1}{(s + r)^2}$$

worin gilt:

$S_1$ = Streuungskoeffizient der Referenzfarbe,

$K_1$ = Ansorptionskoeffizient der Referenzfarbe,

$$X = t + v$$

mit

$$t = \frac{1}{\sqrt{\Delta}},$$

$$v = \frac{K_A}{\sqrt{\Delta}},$$

$$\Delta = M_0 \, (1 - K_S) \, (1 - K_A)$$

## Revendications

1. Procédé pour déterminer la composition d'une couleur composite correspondant à un spécimen standard dont la couleur doit être mise en correspondance, ledit procédé comprenant les étapes consistant à :
   - préparer un jeu de spécimens comprenant n couleurs composantes données,
   - sélectionner une couleur de référence parmi les n couleurs composantes données,
   - préparer des spécimens avec des mélanges de ladite couleur de référence avec des concentrations croissantes de chacune des (n-1) autres couleurs composantes,
   - préparer des mélanges d'un nombre donné de couleurs composantes définies par les concentrations respectives de chaque couleur composante,
   - mesurer avec un premier spectrophotomètre la lumière réfléchie par chaque spécimen des n couleurs composantes pour une pluralité de longueurs d'onde,
   - calculer à partir des dites mesures deux paramètres, p et q, caractérisant les dites couleurs,
   - mesurer, avec un deuxième spectrophotomètre, la lumière réfléchie par un spécimen comprenant le mélange de ladite couleur de référence avec une couleur composante pour une pluralité de longueurs d'onde,
   - calculer, à partir des dites mesures, deux paramètres, r et s, caractérisant ledit deuxième spectrophotomètre et une constante de couplage (Θ) entre ledit deuxième spectrophotomètre et ladite couleur référencée,
   - mesurer, avec ledit deuxième spectrophotomètre, la lumière réfléchie par le spécimen de la couleur composite, dont la composition doit être déterminer, pour une pluralité de longueurs d'onde,
   - calculer, à partir des dites mesures, différentes compositions donnant, pour ladite couleur composite, la concentration des couleurs composantes respectives,
   - sélectionner, parmi les différentes compositions pour ladite couleur composite, celle qui est la plus proche de celle définie lors de la préparation des mélanges des couleurs composantes.

2. Procédé selon la revendication 1, dans lequel les dites n couleurs composantes sont le noir et le blanc, et les dits deux paramètres caractérisant les dites couleurs sont donnés par

$$p = \frac{K_w}{K_b} - 1$$

$$q = \frac{K_w + 2S_w}{K_b + 2S_b} - 1$$

où :

$K_w$ =     coefficient d'absorption de la couleur blanche
$K_b$ =     coefficient d'absorption de la couleur noire
$S_w$ =     coefficient de diffusion de la couleur blanche
$S_b$ =     coefficient de diffusion de la couleur noire

**3.** Procédé selon la revendication 1 ou 2, dans lequel les dits deux paramètres caractérisant ledit deuxième spectrophotomètre sont donnés par

$$r = M_0$$

$$s = \frac{2(1 - K_s) - (1 + K_A)}{1 + K_A}$$

où :

$M_0$      : facteur multiplicatif,
$K_S$      : coefficient de réflexion à la surface de l'échantillon,
$K_A$      : coefficient de réflexion interne de l'appareil de mesure.

**4.** Procédé selon la revendication 3, dans lequel ladite constant de couplage entre ledit deuxième spectrophotomètre et ladite couleur référencée est

$$\Theta = \frac{2S_1 + K_1}{2K_1} \frac{1}{X^4} \frac{1}{(s + r)^2}$$

où :

$S_1$      : coefficient de diffusion de ladite couleur référencée
$K_1$      : coefficient d'absorption de ladite couleur référencée,

$$X = t + v$$

avec

$$t = \tfrac{1}{\sqrt{\Delta}} \,,$$

$$v = \frac{K_A}{\sqrt{\Delta}},$$

$$\Delta = M_0 (1 - K_S)(1 - K_A)$$